Europäisches Patentamt

(19) European Patent Office

Office européen des brevets

(11) Numéro de publication: **0 059 018**
**B1**

(12) # FASCICULE DE BREVET EUROPEEN

(45) Date de publication du fascicule du brevet:
**22.05.85**

(21) Numéro de dépôt: **82200195.4**

(22) Date de dépôt: **18.02.82**

(51) Int. Cl.⁴: **G 06 F 9/46**

54 **Multiprocesseur avec affectation dynamique des tâches en multitraitement et son utilisation.**

(30) Priorité: **25.02.81 FR 8103747**

(43) Date de publication de la demande:
**01.09.82 Bulletin 82/35**

(45) Mention de la délivrance du brevet:
**22.05.85 Bulletin 85/21**

(84) Etats contractants désignés:
**DE FR GB IT SE**

56 Documents cités:
**EP - A - 0 006 164
NL - A - 7 016 115
US - A - 4 035 777
US - A - 4 257 097**

**Feilmeier, Parallel Computers - Parallel Mathematics,
Proceedings of the IMACS (AICA)-GI, Symposium March
14-16, 1977, Technical University of Munich pages
333-337
IBM TECHNICAL DISCLOSURE BULLETIN, vol. 22, no. 6,
novembre 1979 NEW YORK (US) D.B. LOMET: "Efficient
task switching with an off-load processor" pages
2596-2598**

(73) Titulaire: **S.A. PHILIPS INDUSTRIELLE ET
COMMERCIALE, 50 Avenue Montaigne, F-75380 Paris
Cedex 08 (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB IT SE**

(72) Inventeur: **Pottier, Denis René Claude, Société Civile
S.P.I.D. 209, rue de l'Université, F-75007 Paris (FR)**
Inventeur: **Lemaire, Edmond, Société Civile
S.P.I.D. 209, rue de l'Université, F-75007 Paris (FR)**
Inventeur: **Letat, Luyen, Société Civile S.P.I.D. 209, rue
de l'Université, F-75007 Paris (FR)**
Inventeur: **Gobert, Jean, Société Civile S.P.I.D. 209, rue
de l'Université, F-75007 Paris (FR)**

(74) Mandataire: **Souquet, Georges et al, Société Civile
S.P.I.D. 209, rue de l'Université, F-75007 Paris (FR)**

## Description

### Arrière-plan de l'invention

La présente invention concerne un multiprocesseur symétrique comprenant plusieurs dispositifs de traitement de données interconnectés par un bus standard commun pour le transport de signaux d'adresses et de signaux de données, chaque dispositif de traitement de données comprenant:

a. un processeur de données local comportant un premier port de données connecté au bus standard;

b. une section de mémoire locale comportant un deuxième port de données connecté au bus standard;

c. un bus local connectant le processeur de données local à la section de mémoire locale;

d. un dispositif de priorité pour accorder à un processeur de données local un accès privilégié à la mémoire locale associée de préférence à un accès par l'intermédiaire du bus standard; le multiprocesseur comportant en outre:

A. une mémoire globale qui est constituée de toutes les mémoires locales groupées pour stocker des segments de programme correspondants pour un programme quelconque à exécuter;

B. un dispositif à file d'attente destiné à recevoir et à stocker une succession de signaux de requête d'exécution de programme parvenant par le bus standard commun et à produire, pour chacun de ces signaux de requête un article de file d'attente pour un dispositif de traitement de données associé;

C. un dispositif de traduction d'adresse pour, à la réception d'une instruction de branchement traduire une adresse logique en une adresse physique.

La notion d'un segment de programme est bien connue; la division d'un programme en segments est effectuée par le programmeur qui écrit le programme. Les éléments d'un segment de programme ont habituellement une relation logique, par exemple par le fait que ces éléments sont tous soit des données élémentaires de l'utilisateur, soit des valeurs paramétriques, soit encore des instructions de programme codées ou non. Les segments peuvent être de longueurs égales ou inégales et les éléments d'une seule catégorie déterminée, par exemple les données de l'utilisateur peuvent être réparties sur des segments différents. Le système de traitement de données peut comprendre d'autres dispositifs tels que des dispositifs d'entrée/sortie. Les processeurs de données locaux et/ou les sections de mémoire locale peuvent avoir des capacités différentes. Un système réparti du type décrit est à même d'exécuter en parallèle plusieurs programmes à la fois.

Le brevet US-A-4 035 777 décrit un multiprocesseur selon le préambule de la revendication 1; les requêtes d'exécution de programme sont stockées dans un premier dispositif de file d'attente générale avant d'être affectées chacune à un des deuxièmes dispositifs de file d'attente particuliers; toute la/les mémoire(s) est(sont) accessible(s) par n'importe quel processeur mais l'accès via le bus local à la mémoire locale est plus rapide que l'accès aux autres mémoires via le bus commun.

Le document IBM Technical Disclosure Bulletin, Vol 22 N° 6 de Novembre 1979, pages 2596 à 2598 décrit un multiprocesseur asymétrique dans lequel certaines fonctions sont affectées à des processeurs spécifiques par un 'offload processor'.

La liaison fixe (statique) d'un programme spécifique à un dispositif de traitement de données associé a plusieurs inconvénients.

En premier lieu, certains segments de programme peuvent être utilisés dans plusieurs programmes. Par exemple, une certaine série d'instructions codées peut être utilisée avec des jeux différents de données d'utilisateur, tandis que chaque jeu de données d'utilisateur doit en outre être traité au moyen d'autres jeux d'instructions codées correspondants. Or, la mémoire pourrait être surchargée si le ou les segments communs étaient stockés plusieurs fois, chaque fois à un des dispositifs de traitement de données.

De plus, dans le cas d'une modification dans un segment commun, le caractère unique du contenu serait détruit. En variante, si un segment commun n'était stocké qu'une seule fois, un accès fréquent à ce segment par l'intermédiaire du bus standard nuirait à la vitesse du traitement. Par ailleurs, la capacité d'une mémoire locale serait facilement insuffisante pour stocker tous les segments d'un long programme. Finalement, cette liaison fixe manquerait complètement de souplesse.

### Résumé de l'invention

L'invention a pour but de procurer un multiprocesseur symétrique, comme expliqué plus haut, comportant des moyens permettant une attribution dynamique des programmes respectifs à des dispositifs de traitement de données correspondants sans exiger une interrogation centralisée de tous les dispositifs de traitement de données au sujet de l'état d'exécution du programme qui leur est attribué et de réaliser les mécanismes requis moyennant des ajouts très modestes aux dispositifs de traitement de données respectifs.

Le but de l'invention est réalisé par le fait que chaque dispositif de traitement comprend en outre:

e. un premier dispositif détecteur destiné à détecter sélectivement, pendant l'exécution d'un segment de programme, une instruction de nonbranchement, une instruction de branchement d'un premier type régissant un branchement dans le segment de programme en cours sans produire un signal d'interruption de changement de portion et une instruction de branchement d'un second type régissant un branchement à l'extérieur du segment en cours;

f. un deuxième dispositif détecteur pour, lors de la détection d'une instruction de branchement d'un second type, détecter sélectivement un branchement dans la portion de programme en cours contenant le segment de programme en cours d'exécution, et un branchement de changement de portion vers une deuxième portion de programme différente de la portion de programme en cours, et pour produire ensuite un signal d'interruption de changement de portion tout en terminant l'exécution de la portion de programme en cours;

g. le deuxième dispositif détecteur comprend un dispositif comparateur pour, lors du décodage d'une instruction de branchement du deuxième type, comparer le numéro de la portion de programme en cours d'exécution et celui de la portion de programme contenant l'adresse physique de destination du branchement du deuxième type et ensuite produire un signal de trappe de changement de portion si les numéros de portion sont différents;

h. un dispositif de signalisation des requêtes d'exécution pour, lors de la production d'un signal de trappe de changement de portion, accéder au dispositif à file d'attente au moyen d'un signal de requête d'exécution de programme par le dispositif de traitement qui contient la portion suivante de la portion de programme ainsi terminée, et d'un signal d'accès à la file d'attente pour interroger un autre article de file d'attente à partir de sa propre file d'attente.

Par conséquent, deux éléments nouveaux sont introduits. En premier lieu, la portion d'un programme est formée d'un ou de plusieurs segments de ce programme. Cette portion, en raison de l'attribution d'un numéro de portion aux segments de programme qui le constituent, peut être réalisée par le programmeur pendant la création du programme. En variante, le numéro de portion est attribué dynamiquement pendant le chargement du programme: le numéro de portion doit de préférence être le même que le numéro de portion d'un ou de plusieurs segments de programme se trouvant dans la même mémoire locale et faisant aussi partie du même programme. Il est cependant parfois préférable qu'une ou plusieurs portions de programme ne contiennent qu'un seul segment de programme. Le premier procédé d'attribution du numéro de portion assure que des segments de programme présentant une corrélation opérationnelle étroite, par exemple par le fait que l'un de ces segments adressera fréquemment le ou les autres, se trouvent dans la même mémoire locale. En tout cas, des segments contenus dans la même portion de programme doivent aussi être contenus dans la même section de mémoire locale. Si un segment d'une portion de programme spécifique est en cours de chargement, il est impératif que d'autres segments de la même portion de programme soient logés dans la même section de mémoire locale.

Or, il n'est pas nécessaire d'inclure le numéro de portion dans la rédaction du programme source et sa notion ne complique pas la tâche du programmeur. De plus, la transférabilité du programme d'une machine à une autre est conservée; par exemple dans le cas où un seul dispositif de traitement est présent, le système de commande de ce système élémentaire peut passer outre au numéro de portion par invalidation du second dispositif détecteur.

Le dispositif à file d'attente peut consister en un programme spécifique résidant dans un des dispositifs de traitement de données également spécifique; pour chacun des dispositifs de traitement de données, une file d'attente des signaux de requête d'exécution de programme est tenue. La répartition du temps d'exécution peut être basée sur une priorité momentanée: l'exécution de chaque programme se poursuit jusqu'à ce qu'une trappe de changement de portion se produise et que l'on passe alors au niveau de priorité suivant. Sinon, le temps d'exécution ininterrompu maximum pour une portion de programme quelconque pourrait être limité à une valeur maximum prédéterminée. De plus, d'autres types de répartition de temps peuvent être utilisés. Dans la situation décrite plus haut, le dispositif de traitement de données spécifique qui contient le dispositif à file d'attente fonctionne comme un dispositif de traitement central.

En variante, chaque dispositif de traitement de données pourrait former une liste de signaux de requête d'exécution de programme reçus qui le concernent en propre. Le programme suivant à exécuter pourrait alors à nouveau être sélectionné à partir de la file d'attente propre des dispositifs de traitement de données respectifs. En conséquence, l'exécution d'un programme est dynamiquement attribuée au dispositif de traitement de données contenant la portion de programme en cours d'exécution dans ce programme. Si la portion de destination est présente dans le même dispositif de traitement de données que la portion d'origine, dans certaines situations il peut être nécessaire de réorganiser la section de mémoire locale, par exemple, si une portion d'un programme n'est plus nécessaire, elle peut être déchargée dans une mémoire d'arrière-plan. Si la portion de destination est présente à un dispositif de traitement de données différent, la file d'attente de ce dernier dispositif acquiert un nouvel article. De plus, dans ce cas, la portion d'origine peut être déchargée dans la mémoire d'arrière-plan. Dans des cas spéciaux, comme expliqué ci-après, un processeur de données local peut exécuter une portion de programme présente dans une autre mémoire locale.

Dans un mode d'exécution préféré, chaque dispositif de traitement de données comprend en outre un troisième dispositif détecteur destiné à détecter, dans une instruction de branchement du deuxième type, un numéro de portion de programme prédéterminé et à annuler alors le signal de trappe de changement de portion associé tant à l'entrée dans la portion de programme prédéterminé qu'au retour de celle-ci.

Une réalisation avantageuse de ce principe est obtenue lorsque le système de commande du dispositif de traitement de données a une capacité lui permettant de stocker un numéro de portion (A). Lors de l'apparition d'une trappe de changement de portion, deux autres numéros de portion sont pertinents, celui de la portion de programme en cours d'exécution (B) et celui de la portion de programme de destination (C). Normalement, A e B sont égaux mais A est mis à jour à chaque changement de portion de programme. Cependant, le numéro de portion prédéterminé peut être associé à une portion de programme contenant un sous-programme de service fréquemment utilisé. Dans certaines circonstances, il est avantageux que le passage à un tel sous-programme de service n'entraîne pas la suspension de l'exécution de la portion de programme en cours et le changement à un autre dispositif processeur réduirait la capacité globale du système de traitement de données. Sous ce rapport, il convient de noter que chaque changement de portion prend un certain temps parce que les contenus des registres doivent être sauvés et que d'autres mesures de suspension doivent être prises. La réduction de capacité due au recours à un accès non privilégié à une section de mémoire locale est alors moins importante que celle qui est provoquée par un changement de portion. Si, dans ce cas, le numéro de portion A n'est pas remis à jour, lors du retour à la portion initiale, les numéros de portion A et C doivent être égaux. Cette dernière condition peut être aisément détectée. Dans certains autres cas, aucune commutation vers un dispositif de traitement de données différent n'est effectuée même si ce dernier dispositif contient la portion de programme de destination. Il en serait ainsi avec des programmes dynamiquement partagés. Ce double accès à des programmes partagés a par exemple été décrit dans le brevet des Etats-Unis d'Amérique n° 3 997 875 de la Demanderesse. Le programme partagés pourrait par exemple être le programme de commande d'une imprimante. La situation pourrait aussi être inversée auquel cas le dispositif de traitement de données assurant l'exécution du programme appelle le programme de commande de l'imprimante et ce programme de commande est alors exécuté par un dispositif de traitement de données différent. Ce dernier dispositif pourrait exécuter le programme de commande (portion) à titre d'exigence préalable à la production de sa propre information mise à jour (par exemple la portion de programme de données d'utilisateur). Pour plus de concision, ceci n'est pas expliqué davantage.

La différence entre le mécanisme de trappe de changement de portion et un mécanisme de trappe plus ancien «segment non stocké en mémoire» doit être claire. Ce dernier mécanisme est utilisé dans une organisation de mémoire hiérarchique comportant une mémoire de premier plan rapide et une mémoire d'arrière-plan plus lente. L'adressage d'un segment qui n'est pas présent dans la mémoire de premier plan nécessite le chargement de ce dernier segment conformément à un algorithme de remplacement de segment. Normalement, cette particularité fait partie d'un système monoprocesseur. Selon ce qui précède, la trappe de changement de portion se présente lorsque le segment de destination est déjà présent dans la mémoire. Evidemment, l'invention pourrait être combinée avec ce mécanisme plus ancien et dans ce cas l'appel d'une portion de programme qui ne se trouve pas dans une section de mémoire locale quelconque, déclencherait une trappe différente.

Brève description des figures

Une forme d'exécution d'une réalisation conforme à l'invention est décrite ci-après avec référence aux figures suivantes:

La Fig. 1 illustre l'agencement général d'un système de traitement de données multiprocesseur;

La Fig. 2 illustre un processeur;

La Fig. 3 est un organigramme de la réalisation d'une trappe de changement de portion – la partie «exécution»;

La Fig. 4 est un organigramme de la réalisation d'une trappe de changement de portion – la partie «extraction»;

La Fig. 5 illustre une variante de la Fig. 4.

Description générale d'une forme d'exécution préférée du système multiprocesseur

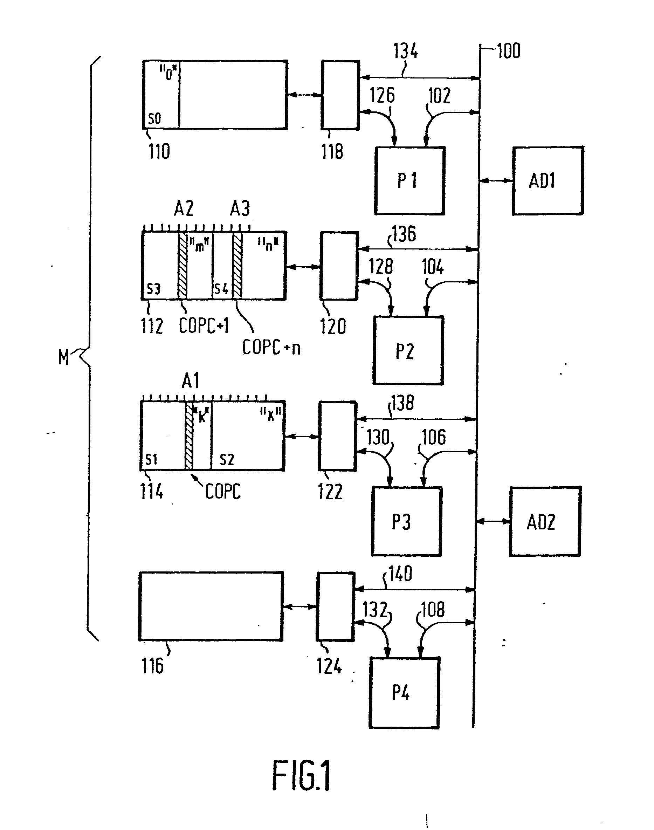

La Fig. 1 illustre l'architecture générale d'un système multiprocesseur. Le système, dans cette forme d'exécution, comprend quatre processeurs P1, P2, P3, P4 qui ont chacun accès au bus standard 100, par l'intermédiaire de leurs lignes d'accès propres 102, 104, 106, 108 respectivement. Pour la commodité, ces lignes d'accès propres et le bus standard 100 ont été dessinés par une seule ligne. Pour plus de concision, le mécanisme qui accorde l'utilisation du bus aux divers dispositifs de traitement de données n'est pas décrit en détail; cet accord pourrait en effet être réalisé par arbitrage réparti. La mémoire M est divisée en quatre sections de mémoire 110, 112, 114, 116 comportant chacune son propre dispositif d'accès 118, 120, 122, 124. Les dispositifs d'accès à la mémoire comprennent les tampons d'adresses habituels, les tampons de données, ainsi que deux ports d'accès. Un port d'accès est connecté au processeur (126, 128, 130, 132) associé tandis que l'autre (134, 136, 138, 140) est connecté au bus standard 100. Chaque dispositif d'accès à la mémoire comprend en outre un élément de priorité destiné à accorder à un accès à la mémoire provenant du processeur associé (par exemple du processeur P3 à la section de mémoire 114) la priorité sur un accès à la mémoire provenant d'un autre processeur et communiquant avec celui-ci par l'intermédiaire du bus standard. La priorité peut être réalisée simplement de la manière suivante: Les signaux de requête associés sont introduits par réunion logique dans la section de mémoire proprement dite, tandis que les signaux d'accusé de réception résultants qui proviennent de la section de mémoire sont transmis au créateur de la requête. Si un processeur local et un processeur non local lancent une requête en même temps, le signal de requête du premier bloque le signal d'accusé de réception pour le second. Par conséquent, le transport des données par l'intermédiaire du bus standard est relativement lent pour diverses raisons. En premier lieu, le bus standard est un système partagé entre plusieurs postes (dans ce cas quatre) à même de lancer des requêtes. En deuxième lieu, même si une requête pour le bus standard a été accordée, l'accès à la mémoire qui doit être établi ainsi peut être refusé parce que la section de mémoire affectée accorde la priorité à une requête d'accès lancée par son processeur propre. Finalement, les bus locaux 126, 128, 130, 132 peuvent admettre un débit de données plus élevé par le fait que la section de mémoire locale et son processeur sont physiquement proches l'un de l'autre; en outre, les conventions de transport sur le bus assurent un transport à vitesse plus basse.

Chaque processeur peut à présent exécuter des instructions de n'importe quel programme présent dans l'ensemble de la mémoire M. Pour obtenir une capacité de traitement améliorée, on attribue donc, de manière générale l'exécution d'un segment de programme présent dans une certaine mémoire locale, comme la mémoire 110, au processeur de données associé, dans ce cas le processeur de données P1. L'algorithme d'attribution fait uniquement partie du programme de surveillance ou du système d'exploitation du système de traitement de données. Ce système d'exploitation peut être d'une nature classique. Le dispositif de traitement de données spécifique contenant l'algorithme d'attribution a un rôle privilégié comme processeur central par exemple par le fait qu'il présente le niveau de priorité le plus élevé dans le cas de requêtes simultanées multiples parvenant au bus de données standard. Le programme d'attribution forme, pour chaque dispositif de traitement de données, une file d'attente de programmes qui y sont attribués et qui sont prêts à être exécutés. Une telle file d'attente peut être réalisée dans une séquence correspondante de position de stockage pour chaque dispositif de traitement de données pourvu d'un indicateur de lecture et d'un indicateur d'enregistrement. Chaque article de la file d'attente comprend les indications nécessaires pour que le processeur entame l'exécution du programme, par exemple un identificateur de programme, l'adresse de l'instruction de démarrage et le contenu initial d'un nombre donné de registres. D'une manière générale, les instructions de programme contenues par exemple dans la mémoire 114 sont plus efficacement exécutées par le processeur P3 que par d'autres, tandis que le transport de données est effectué par l'intermédiaire du bus local 130. Pour d'autres sections de mémoire 110...116, une situation correspondante existe parce qu'aucun transport de données à grande échelle sur le bus standard 100 n'est alors requis.

Il convient de noter que le bus standard 100 pourrait être connecté à d'autres dispositifs AD1, AD2 tels que: mémoire d'arrière-plan, dispositifs d'entrée-sortie et contrôleurs de communication de données avec lignes de communication extérieures associées.

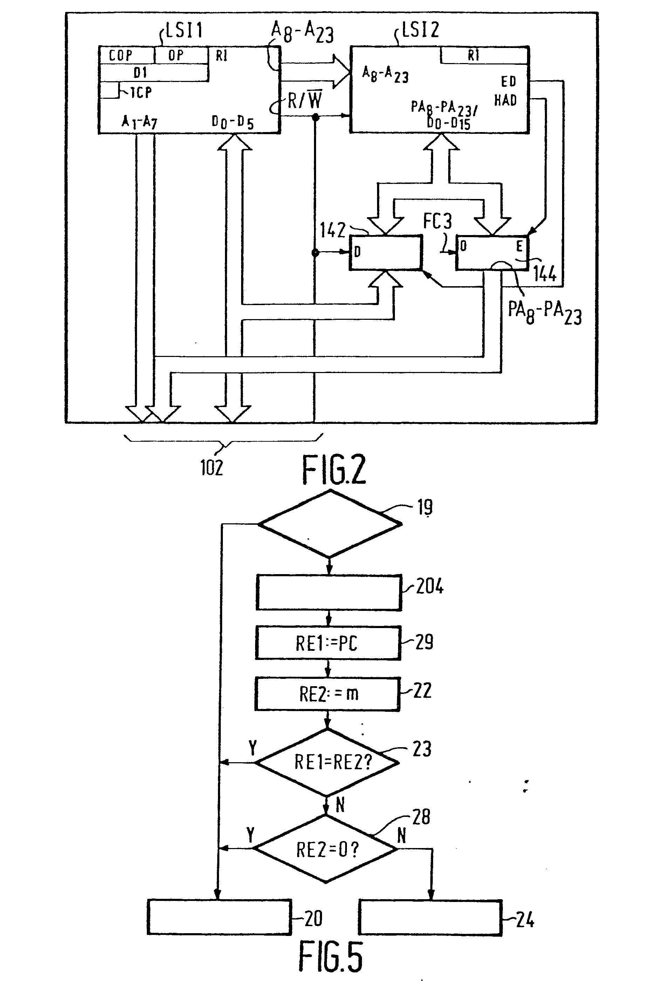

La Fig. 2 illustre schématiquement la structure d'un des processeurs. Selon l'état actuel d'intégration à grande échelle, un processeur comprend essentiellement deux modules de circuit intégré LSI1, LSI2 interconnectés et microprogrammés. Dans cette situation spécifique, deux modules plus petits supplémentaires 142, 144 sont ajoutés. Dans le futur, ces quatre modules seront facilement réunis en un seul module. Le module LSI1

comprend spécialement les circuits logiques destinés à exécuter les instructions et peut être représenté par un microprocesseur MC68000 à seize bits, fabriqué par la Société Motorola Corporation, de Phoenix, Arizona, Etats-Unis d'Amérique. Il a été divulgué dans le mode d'emploi MC68000 publié initialement le 1er September 1979 et décrit dans un article de E. Stritter et collaborateurs dans le périodique Computer de Février 1979 aux pages 43 à 52. Parmi les particularités notables de ce micro-ordinateur, on trouve un mot de données de 16 bits, huit registres de données de 32 bits, sept registres d'adresse de 32 bits, deux pointeurs de pile de 32 bits et un compteur de programme de 24 bits.

Il présente une longueur d'instruction de un à cinq mots de seize bits dont le premier, soit le mot d'opération, spécifie l'opération et les modes (les autres spécifient un opérande immédiat et des extensions d'adresses). De plus, un registre d'état de seize bits est prévu, contenant un byte d'utilisateur de huit bits et un byte de système de huit bits. En plus des broches d'adresses, de données et d'alimentation, le microprocesseur comporte trois broches d'état de processeur trois broches de commande de périphériques, trois broches de commande de système, cinq broches de commande de bus asynchrones (dont R̄/W), trois broches de commande d'arbitrage de bus et trois broches de commande d'interruption. Tout puissant qu'il soit, le micro-ordinateur MC68000 ne peut pas gérer de grandes ressources de mémoires par lui-même. Il compte à cet effet sur un deuxième module de circuit intégré LSI2 du type MC68451 pour traiter les tâches associées à la mémoire virtuelle et à la logistique multitâches. Le module LSI2 peut assurer:

– la translation d'une adresse mémoire logique en une adresse mémoire physique

– la séparation de l'espace d'adresses des ressources de l'utilisateur et du système

– la séparation des espaces d'adresses de programme et de données

– la communication interprocessus par des ressources partagées

– la logistique de la mise en page et de la segmentation de la mémoire

– la présence d'unités de gestion de mémoires multiples dans un système.

Le boîtier à 64 broches comporte un premier jeu de broches associé à l'espace d'adresses logique (broches d'adresses A8–A23 et A1–A5, broches d'état de processeur, broches de commande de bus asynchrones), un deuxième jeu de broches associé à l'espace d'adresses physique (broches de gestion de bus, broches de données PA8 à PA23 et autres broches ED, HAD) ainsi que plusieurs connexions dites globales.

Comme indiqué aux dessins, les sept premiers bits d'adresses de LSI1 sont appliqués directement à la ligne d'entrée/sortie 102 de même que les bits de données D0 à D15 et qu'un signal de commande de lecture/enregistrement. Les bits d'adresses A8 à A23 sont en outre transportés vers un dispositif de gestion de mémoire LSI2. Ce

dernier comporte un port de données multiple-xées/adresses connecté à l'émetteur récepteur de données 142, de Texas Instruments, type 74 LS 245 et au dispositif de verrouillage d'adresses 144, de Texas Instruments, type S4 LS 373. Une commande supplémentaire est assurée par les sorties ED et HAD de l'élément LSI2. De cette façon, la ligne 104 est pourvue d'un trajet d'adresses de 23 bits et d'un trajet de données de 16 bits. Une extension supplémentaire du montage représenté obtenue en doublant le dispositif de gestion de mémoire permettrait de traiter 64 descripteurs de segment. L'inclusion de signaux de commande supplémentaires à la partie de commande du bus standard n'est pas décrite en détail, par concision. Dans la description qui suit, on se réfère de manière spécifique au registre d'instruction de l'élément LSI1, à savoir R1, et, dans ce registre, aux parties COP pour stocker le code opération et OP pour stocker un opérande et, de plus, à un des registres cités D1 et à un bit de signalisation d'état TCP qui peut se trouver dans le registre d'état ou dans un autre des registres cités. De plus, on se réfère au registre RT de l'élément LSI2 qui sert à stocker un descripteur de segment pertinent; ces parties sont des éléments normaux des 2 modules LSI1 et LSI2. Pour plus de simplicité, les registres de stockage et les bits n'ont été indiqués que schématiquement. Par conséquent, dans ce montage, le processeur, tel que P1 sur la Fig. 1, ne comporte qu'une seule partie de données/adresses 102. Ceci exige une légère modification sur la Fig. 1 par le fait que la ligne 102 doit être connectée au bloc 118 au lieu de la ligne 126. Cette dernière est alors absente. Une situation analoge se présente dans les autres dispositifs de traitement de données.

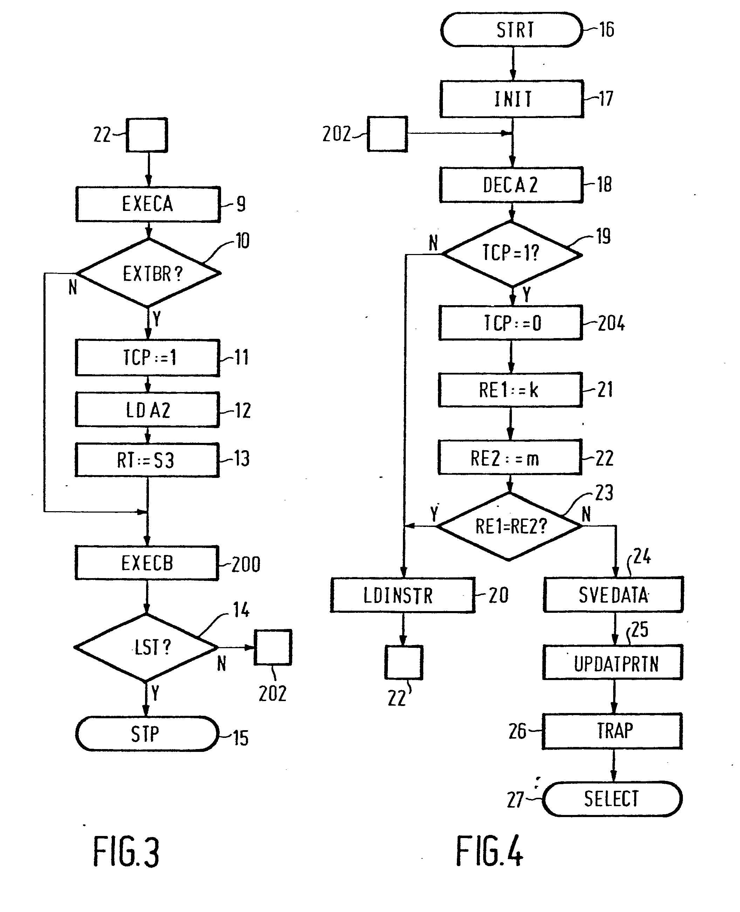

La Fig. 3 est un organigramme de la réalisation d'une trappe de changement de portion, et en particulier de la partie «exécution» de cette trappe; il va de soi que l'instruction en cours d'exécution a déjà été extraite et est présente dans le registre d'instruction. Le bloc 22 symbolise l'entrée dans l'organigramme, à partir de l'organigramme de la Fig. 4. Le bloc 9 de la Fig. 3 symbolise les stades initiaux de l'exécution de cette instruction. Dans la situation représentée à titre d'exemple sur la Fig. 1, il s'agirait de l'instruction qui était présente dans la section de mémoire locale 114 à l'adresse A1. L'exécution est par conséquent effectuée dans le processeur P3. A un moment donné pendant cette exécution, le processeur P3 entreprend de détecter si l'instruction en cours est une instruction de branchement et notamment s'il s'agit d'une instruction dite de «branchement étendu»; cette dernière action est symbolisée par le bloc 10. Le programme contenant cette instruction en cours est attribué à ce processeur spécifique par l'algorithme d'attribution et est placé, jusqu'au début de son exécution, dans la file d'attente du processeur P3; ceci pourrait être effectué par un programme d'attribution centralisé. Dans cet exemple, le programme en cours d'exécution considéré comprend trois segments de programme parmi lesquels les segments S1, S2 ont été stockés dans la section de mémoire 114 et le segment de programme S3 a été stocké dans une autre section de mémoire 112. Les deux segments de programme S1, S2 ont à présent été placés dans la portion de programme «k», par exemple par le fait que le numéro indicateur «k» a été introduit dans les descripteurs de segment, soit à la conception du programme par un programmeur, soit pendant le chargement des segments correspondants par un sous-programme d'attribution de numéro de portion. Ce sous-programme, dans une forme simple, attribue le même numéro de portion à tous les segments d'un programme pourvu qu'ils soient chargés dans la même section de mémoire locale. Il serait admissible qu'une section de mémoire locale contienne deux groupes de segments de programme associés à deux programmes respectifs. Evidement dans ce dernier cas, chaque groupe de segments de programme comporte un numéro de portion respectif différent. Or, dans l'exemple représenté sur la Fig. 1, le segment S3 est placé dans la portion de programme «m» tandis que «k» diffère de «m».

De plus, aucun autre segment de programme, non stocké dans les sections de mémoire respectives 114, 112 ne fait partie des portions de programme «k», «m». Comme expliqué plus haut, le groupement de segments de programme en portions de programme peut être effectué pour les raisons opérationnelles par le fait que les segments de programme respectifs d'une seule portion de programme sont utilisés en coïncidence. Comme le montre à nouveau la Fig. 3, le code opération de l'instruction en cours à l'adresse A1, est présent dans le registre R1 du processeur P3 pour un décodage (supplémentaire). Le décodage et l'exécution de l'instruction sont donc effectués sous la commande d'un microprogramme mais, en dehors des opérations décrites, aucune autre explication du reste des opérations qui est classique n'est donnée ci-après. La détection du code de «branchement étendu», en une adresse extérieure au segment en cours, est effectuée dans le bloc 10. Si ce «branchement étendu» n'est pas présent (aucune instruction de branchement ou un branchement dans le branchement de segment en cours du premier type) le système passe directement au bloc 200. Si, l'autre part, l'instruction en cours régit un branchement du second type, le processeur passe au bloc 11. Dans le bloc 11, le bit de signalisation TCP est mis à «1». Ce «1» signale le branchement en dehors-du-segment et ce bit de signalisation doit par conséquent être à zéro à la sortie du bloc 9. Ceci est effectué par le fait que le bit TCP est réservé uniquement à cette signalisation spécifique ou peut être partagé pour une autre fonction mais, dans ce cas, l'autre fonction doit assurer que le bit TCP soit remis à zéro avant que l'extrémité du bloc 9 soit atteinte. Dans le bloc 12, l'adresse logique A2 du branchement souhaité est chargée; cette adresse doit être l'opérande de l'instruction de branchement. De plus, le numéro du segment de destination, par exemple le segment S3, est tamponné dans le registre RT. Dans le bloc 200, le reste (éventuel) de l'instruction en cours est exécuté. Par conséquent, l'ensemble des blocs 9, 200 forme l'exécution éventuellement classique de l'instruction dans laquelle un de ces blocs 9, 200 peut être absent. Dans le bloc 14, on détermine si l'instruction en cours était la dernière du programme. S'il en est ainsi, (Y), dans le bloc 15, le programme est terminé et on accède à la file d'attente pour détecter si un autre programme doit être exécuté par le processeur en question (dans ce cas P3). Dans le cas négatif, l'exécution de l'instruction en cours dans le bloc 202 a donc été terminée et le système passe à la Fig. 4.

La Fig. 4 illustre un organigramme d'une deuxième partie d'une réalisation d'une trappe de changement de portion, la partie «extraction». De plus, les opérations d'initialisation du programme sont représentées. Le bloc 16 symbolise le lancement du programme depuis la file d'attente du dispositif de traitement de données en question. Le bloc 17 symbolise les opérations d'initialisation normales avant le lancement du programme; il est nécessaire entre autres qu'à l'extrémité de ce bloc, le bit de signalisation TCP soit égal à zéro et que l'adresse de l'instruction initiale (considérée ici comme l'adresse «suivante» A2) soit chargée. Les fonctions dans les blocs 14, 15, 16, 17 sont données à titre d'exemple.

Le bloc 202 symbolise l'entrée à partir de l'organigramme de la Fig. 3. Dans le bloc 18, l'adresse logique de l'instruction suivante A2 est transformée en une adresse physique. On sait qu'une adresse de mémoire logique est un numéro: les parties de l'adresse (bits ou groupes de bits) ne doivent pas être en relation avec le cloisonnement physique de la mémoire, dans ce cas-ci avec les sections de mémoires respectives. D'autre part, une adresse physique peut contenir plusieurs parties, chaque partie de l'adresse désignant un dispositif ou un sous-dispositif de mémoire spécifique. Par conséquent, cette translation produit le numéro de portion qui, dans le cas de l'adresse A2, est égal à «m». Le processeur vérifie ensuite dans le bloc 19 l'état du bit de signalisation TCP qui, dans le cas d'une réponse négative (N) commande une transition vers le block 20 qui sera examiné ci-après. Cependant, si le bit de signalisation TCP est dans l'état «1», le système passe au bloc 204. Dans le bloc 204, le bit de signalisation TCP est remis à zéro et n'est plus utilisé jusqu'à une entrée suivante possible dans la Fig. 3, bloc 11, ou, comme expliqué plus haut, éventuellement pour exécuter un sous-programme différent qui laisserait finalement cette position de bit à zéro du moins à la sortie du bloc 9 sur la Fig. 3. Quant à la Fig. 4, dans le bloc 21, le numéro de la portion de programme en cours (dans le cas de l'adresse en cours A1, ce numéro est égal à «k») est tamponné dans le registre d'entrée RE1 du dispositif arithmétique et logique (ALU) de la partie LSI1 du processeur P3. Dans le bloc 22, le numéro de portion de l'adresse de destination (dans le cas de l'adresse de destination A2 dans le segment de programme S3, ce numéro serait égal à «m») est tamponné dans un autre registre d'entrée RE2 du dispositif arithmétique et logique de la partie LSI1 du processeur P3. L'adresse de destination contient dans cet exemple le code d'instruction $COP_{c+1}$ de l'instruction requise ensuite. En variante, cette adresse de destination peut contenir tout autre élément de programme requis par la suite. Dans le bloc 23, le dispositif LSI1 vérifie si les contenus des deux registres RE1 et RE2 sont identiques. S'ils sont identiques (Y), aucun changement de portion n'est requis et le système passe au bloc 20. Ceci pourrait se produire, même dans le cas d'une instruction de branchement étendu, pendant une transition du segment de programme S1 vers le segment de programme S2 qui se trouvent tous deux dans la portion de programme «k». Si les deux chiffres ne sont pas égaux (N) dans le bloc 24, l'état du programme en cours est sauvé: suivant l'état du programme, le contenu du compteur de programme, celui des paramètres cruciaux et celui des registres sont sauvés dans une mémoire tampon propre au programme en cours. Les mesures de sauvetage sont bien connues et, par concision, elles ne seront pas expliquées davantage. Dans le bloc 25, le numéro de portion en cours subit ensuite une remise à jour qui le fait passer de «k» à «m». Alternativement, la remise à jour peut être exécutée au bloc 17, le bloc 25 étant supprimé. Dans le bloc suivant, le bloc 26, un signal de trappe de changement de portion est produit pour le programme de file d'attente. Ce signal de trappe de changement de portion contient le numéro de portion de programme «m» (destination) et éventuellement une ou plusieurs données qui doivent être utilisées instantanément lors de l'entrée dans la portion de programme «m». Le signal de trappe de changement de portion implique en outre l'extraction de la première instruction du sous-programme de trappe par le processeur P3. Ce sous-programme est présent dans un segment de programme stocké dans la section de mémoire local du processeur P3, segment qui n'est pas représenté au dessin. Finalement, dans le bloc 27, le processeur P3 abandonne le programme en cours et sélectionne le programme suivant présent dans sa propre file d'attente. Le lancement de son exécution implique à nouveau le passage au bloc 16 de la Fig. 4. Il en est de même lorsque le bloc «d'arrêt» 15 de la Fig. 3 est atteint.

D'autre part le programme d'attribution doit placer la requête de trappe de changement de portion dans la file d'attente pour le processeur prévu, dans ce cas-ci le processeur P2. Si le programme d'attribution doit être exécuté par un des processeurs spécifiques, la tâche associée peut avoir la préférence sur une tâche quelconque en cours d'exécution actuellement dans ce processeur spécifique. Dans certains cas, l'utilisateur peut avoir spécifié qu'un processeur différent conviendrait mieux pour exécuter le segment de programme S3; le programme d'attribution doit alors traiter la requête de manière correspondante. Il est à noter que la production d'une file d'attente pour un processeur quelconque peut également être assurée suivant l'un de divers principes. A titre d'exemple il y a le principe du «premier arrivé premier servi» et un algorithme dans lequel chaque programme a un niveau de priorité fixe parmi les programmes. Cependant si on atteint le bloc précédent 20, l'instruction de destination y est chargée à partir de la section de mémoire locale dans le registre d'instruction du processeur local. Dans ce cas, aucun changement de portion n'est effectué. Le cycle d'exécution est ensuite à nouveau atteint sur la Fig. 3 par l'intermédiaire du bloc 22.

Dans certains cas, le programme pourrait contenir d'autres segments de programme tels que le segment S4 également présent dans la section de mémoire local 112. Une première approche consiste à donner aux segments de programme S3 et S4 le même numéro de portion de programme. Un branchement allant du segment de programme S3 au segment de programme S4 (par exemple vers l'adresse de destination A3) ne produit aucun changement de portion. Dans d'autres cas, il pourrait être avantageux ou même nécessaire d'attribuer des numéros de portion de programme différents «m» et «n» comme indiqué au dessins. A titre d'exemple, le segment de programme S4 pourrait être partagé par plusieurs programmes ou l'apparition d'un branchement entre les segments S3 et S4 pourrait être un cas exceptionnel. Il convient de noter que tous les segments de programme de la même portion de programme doivent être stockés dans une seule section de mémoire locale et que l'exigence de stockage résultante pour une section de mémoire locale pourrait mettre en danger la flexibilité de la gestion de la mémoire. Cependant, si les segments de programme S3 et S4 portent des numéros de portion différents, un branchement entre ces segments déclenche un changement de portion ce qui provoque une diminution de l'efficacité du traitement. Evidemment, les effets contraires des deux choix peuvent varier d'un cas à l'autre.

Dans certaines situations, il est avantageux d'annuler un signal de «trappe de changement de portion» auquel cas la référence porterait sur un numéro de portion spécifique ou privilégié. Quoique plusieurs numéros de portion privilégiés de ce genre peuvent exister dans n'importe quel système simple, un seul numéro est considéré ci-après: le numéro de portion «zéro». Cette portion de programme pourrait contenir un ou plusieurs segments de programme tels que le segment S0. Ce segment pourrait contenir un sous-programme de service, par exemple un sous-programme de conversion ou de chiffrement. Ce sous-programme de service pourrait être adressé de manière répétée à partir de divers autres segments S1, S2, S3, S4 du programme en cours d'exécution ou même à partir de divers programmes différents. Comme le montre la Fig. 1, le segment S0, la portion «zéro» a été chargée dans la section de mémoire 110. En particulier, si l'exécution du sous-programme de service n'exige qu'un transfert de données/adresses limité sur le bus standard commun et sur le bus local 134, le délai produit par ce transfert (et par l'encombrement exigé des ressources du bus partagé) ne produit qu'une diminution limitée de la capacité de traitement. Cette diminution doit équilibrer le délai provoqué par le double changement de portion pendant l'appel du sous-programme de service et le retour à partir de celui-ci, la mise à jour des files d'attente, etc.

En conséquence, la Fig. 5 illustre une variante de la Fig. 4 tandis qu'une partie seulement de l'organigramme précédent a été répétée. Les blocs 19, 20, 22, 23, 24 sont identiques aux blocs correspondants de la Fig. 4. Deux différences notables sont présentes par rapport à la Fig. 4. En premier lieu, une adresse de stockage PC a été utilisée dans la machine pour stocker le numéro de portion de programme de la portion en cours d'exécution. Il s'agit là de l'adresse stockée qui est mise à jour dans le bloc 25 de la Fig. 4. Or, dans le bloc 29, le numéro de la portion de programme en cours est extrait de la position d'adresse PC et est tamponné dans le registre d'entrée RE1 du dispositif arithmétique et logique de la partie LSI1 du processeur d'origine. De plus, dans le bloc 28, le numéro de la portion de destination est vérifié pour voir s'il est égal à zéro. Dans l'affirmative, la trappe n'est pas effectuée car le système passe au bloc 20: ceci signifie que les contenus de la position d'adresse PC ne sont pas remis à jour. Or, lorsque la portion de programme privilégiée est appelée, l'essai dans le boc 28 a un résultat positif. En variante, lors d'un retour à partir de la portion de programme privilégiée, l'essai dans le bloc 23 a un résultat positif parce que PC contient encore le premier numéro de portion. D'autre part, lorsqu'une portion de programme non privilégiée est applée, les essais dans les blocs 23, 28 ont des résultats négatifs, à la fois lors de l'appel de la dernière portion de programme et lors du retour à partir de celle-ci. Il est à noter qu'un appel de la portion de programme privilégiée vers une autre portion que la portion initiale n'implique pas un retour. Par conséquent, les deux essais dans les blocs 23, 28 donnent un résultat négativ et par conséquent, le bloc 24 est atteint. Une situation similaire se présente lorsqu'il y a deux (ou plus de deux) portions de programme privilégiée. L'essai dans le bloc 28 est alors une vérification d'égalité pour l'un ou l'autre des numéros de portion de programme privilégiée.

## Revendications

1. Multiprocesseur symétrique comprenant plusieurs dispositifs de traitement de données interconnectés par un bus standard commun (100) pour le transport de signaux d'adresses et de signaux de données, chaque dispositif de traitement de données comprenant:

   a. un processeur de données local (P1 à P4) comportant un premier port de données connecté au bus standard;

   b. une section de mémoire locale (110, 112, 114, 116) comportant un deuxième port de données connecté au bus standard;

   c. un bus local (126, 128, 130, 132) connectant le processeur de données local à la section de mémoire locale;

d. un dispositif de priorité (118, 120, 122, 124) pour accorder à un processeur de données local un accès privilégié à la mémoire locale associée de préférence à un accès par l'intermédiaire du bus standard; le multiprocesseur comportant en outre:

A. une mémoire globale qui est constituée de toutes les mémoires locales groupées pour stocker des segments de programme correspondants pour un programme quelconque à exécuter;

B. un dispositif à file d'attente destiné à recevoir et à stocker une succession de signaux de requête d'exécution de programme parvenant par le bus standard commun et à produire, pour chacun de ces signaux de requête un article de file d'attente pour un dispositif de traitement de données associé;

C. un dispositif de traduction d'adresse (18), pour, à la réception d'une instruction de branchement, traduire une adresse logique en une adresse physique caractérisé en ce que chaque dispositif de traitement comprend en outre:

e. un premier dispositif détecteur (10) destiné à détecter sélectivement, pendant l'exécution d'un segment de programme, une instruction de non-branchement, une instruction de branchement d'un premier type régissant un branchement dans le segment de programme en cours sans produire un signal d'interruption de changement de portion et une instruction de branchement d'un second type régissant un branchement à l'extérieur du segment en cours;

f. un deuxième dispositif détecteur (23) pour, lors de la détection d'une instruction de branchement d'un second type, détecter sélectivement un branchement dans la portion de programme en cours contenant le segment de programme en cours d'exécution, et un branchement de changement de portion vers une deuxième portion de programme différente de la portion de programme en cours, et pour produire ensuite un signal d'interruption de changement de portion (26) tout en terminant l'exécution de la portion de programme en cours;

g. le deuxième dispositif détecteur comprend un dispositif comparateur pour, lors du décodage d'une instruction de branchement du deuxième type, comparer le numéro de la portion de programme en cours d'exécution et celui de la portion de programme contenant l'adresse physique de destination du branchement du deuxième type et ensuite produire un signal de trappe de changement de portion si les numéros de portion sont différents;

h. un dispositif de signalisation des requêtes d'exécution (27) pour, lors de la production d'un signal de trappe de changement de portion, accéder au dispositif à file d'attente au moyen d'un signal de requête d'exécution de programme par le dispositif de traitement qui contient la portion suivante de la portion de programme ainsi terminée, et d'un signal d'accès à la file d'attente pour interroger un autre article de file d'attente à partir de sa propre file d'attente;

2. Multiprocesseur suivant la revendication 1, caractérisé en ce que chaque dispositif de traitement de données comprend en outre un troisième dispositif détecteur (28) destiné à détecter, dans une instruction de branchement du deuxième type, un numéro de portion de programme prédéterminé et à annuler, lors de cette détection, le signal de trappe de changement de portion associé, cette annulation produisant ses effets tant à l'entrée dans sa portion de programme prédéterminée qu'au retour de celle-ci.

3. Procédé d'affectation dynamique des tâches en multitraitement dans un multiprocesseur symétrique selon la revendication 1, caractérisé en ce qu'il est premièrement procédé à l'affectation initiale de chaque tâche à un processeur, cette affectation initiale ayant pour but la constitution, pour chaque processeur, d'une file d'attente contenant une succession de signaux de requête d'exécution,

deuxièmement, lors de l'exécution d'une tâche par un premier processeur, il est procédé, au moyen dudit deuxième dispositif détecteur (23), à la détection de l'exécution d'instruction de branchement dont l'adresse cible est située dans une portion de programme différente et chargée dans la mémoire locale d'un autre processeur

troisièmement lors de ladite détection, avec une production dudit signal d'interruption de changement de portion (26), l'exécution de la tâche en cours est abandonnée par le premier processeur et une requête d'exécution est générée dans la file d'attente de l'autre processeur pour la continuation de l'exécution de la dite tâche, de telle sorte qu'un changement d'affectation dynamique de la tâche a été effectué.

**Patentansprüche**

1. Symmetrischer Multiprozessor mit mehreren Datenverarbeitungseinheiten, die über einen gemeinsamen Normalbus (100) für die Übertragung von Adress-Signalen und Datensignalen miteinander verbunden sind und je enthalten:

a. einen Ortsprozessor (P1 . . .P4) mit einem an den Normalbus angeschlossenen ersten Anschluss;

b. einen Ortsspeicherabschnitt (110, 112, 114, 116) mit einem an den Normalbus angeschlossenen zweiten Anschluss;

c. einen Ortsbus (126, 128, 130, 132) zum Verbinden des Ortsprozessors mit dem Ortsspeicherabschnitt;

d. eine Prioritätseinheit (118, 120, 122, 124) die einen Ortsprozessor für einen bevorzugten Zugriff zum zugeordneten Ortsspeicher vor einem über den Normalbus ankommenden Speicherzugriff einstellt, wobei der Multiprozessor weiter noch enthält:

A. einen Gesamtspeicher, der aus allen Ortsspeichern zusammen besteht und zum Speichern jeweiliger Programmsegmente für ein durchzuführendes Programm dient;

B. eine Wartelistenanordnung zum Empfangen und Speichern einer Signalfolge der Programmausführungsanfrage, die über den gemeinsamen Normalbus ankommt, und zum Erzeugen eines Wartelistenpostens für jedes der Anfragesignale an eine zugeordnete Datenverarbeitungseinheit;

C. eine Adressübersetzungsanordnung (18) zum Übersetzen einer logischen Adresse in eine physikalische Adresse beim Empfang eines Verzweigungsbefehls, dadurch gekennzeichnet, dass jede Datenverarbeitungseinheit weiter noch enthält:

e. einen ersten Detektor (10) zum selektiven Detektieren eines Nichtverzweigungsbefehls, eines Verzweigbefehls von einem ersten Typ zur Steuerung einer Verzweigung innerhalb des laufenden Programmsegments ohne die Erzeugung eines Unterbrechungssignals zur Änderung eines Programmteils und eines Verzweigungsbefehls von einem zweiten Typ zur Steuerung einer Verzweigung aus dem laufenden Programmsegment hinaus;

f. einen zweiten Detektor (23), der bei der Detektion eines Verzweigungsbefehls von einem zweiten Typ eine Verzweigung innerhalb des laufenden Programmteils mit dem laufenden Programmsegment und eine Programmteiländerungsverzweigung nach einem zweiten, sich vom laufenden Programmteil unterscheidenen Programmteil detektiert und anschliessend ein Programmänderungs-Unterbrechungssignal (26) erzeugt, wobei die Durchführung des laufenden Programmteils beendet wird;

g. wobei der zweite Detektor einen Vergleicher enthält, der bei der Decodierung eines Verzweigungsbefehls vom zweiten Typ die Nummer des laufenden Programmteils mit der Nummer des Programmteils mit der physikalischen Adresse der Verzweigungsbestimmung vom zweiten Typ vergleicht und anschliessend ein Programmteiländerungs-Unterbrechungssignal erzeugt, wenn die Programmteilnummern verschieden sind;

h. ein Durchführungsanfrage-Signalisierungsmittel (27), das beim Erzeugen eines Programmteiländerungs-Unterbrechungssignals mit Hilfe eines Programmdurchführungsanfragesignals über die Datenverarbeitungseinheit, die den folgenden Programmteil des so beendeten Programmteils enthält, und mit Hilfe eines Wartelistenzugriffssignals zum Abfragen eines anderen Wartelistenpostens ausgehend von seiner eigenen Warteliste in die Wartelistenanordnung zugreift.

2. Multiprozessor nach Anspruch 1, dadurch gekennzeichnet dass jede Datenverarbeitungseinheit weiter noch einen dritten Detektor (28) zum Detektieren einer Nummer des vorgegebenen Programmteils in einem Verzweigungsbefehl vom zweiten Befehl und zum Unterdrücken des zugeordneten Programmteiländerungssignals bei dieser Detektion enthält, wobei diese Unterdrückung sich sowohl am Anfang im vorgegebenen Programmteil als auch am Ende davon auswirkt.

3. Verfahren mit dynamischer Aufgabenzuordnung in der Mehrfachprogrammierungsbetriebsart in einem symmetrischen Multiprozessor nach Anspruch 1, dadurch gekennzeichnet, dass erstens jedem Prozessor am Anfang eine Aufgabe zugeordnet wird, welche Anfangszuordnung dazu dient, für jeden Prozessor eine Warteliste mit einer Durchführungsanfragesignalfolge zu bilden,

zweitens bei der Ausführung einer Aufgabe durch einen ersten Prozessor mit Hilfe des zweiten Detektors (23) die Durchführung des Verzweigungsbefehls detektiert wird, dessen Bestimmungsadresse in einem anderen Programmteil liegt und in den Ortsspeicher eines anderen Prozessors eingeschrieben wird,

drittens bei dieser Detektion mit einer Erzeugung des Programmteiländerungs- Unterbrechungssignals (26) die Durchführung der laufenden Aufgabe vom ersten Prozessor aufgegeben und eine Durchführungsanfrage in der Warteliste des anderen Prozessors für die Fortsetzung der Durchführung der erwähnten Aufgabe derart erzeugt wird, dass eine Änderung der dynamischen Aufgabenzuordnung erfolgt ist.

## Claims

1. A symmetrical multiprocessor comprising a plurality of data processing devices which are interconnected by a common standard bus (100) for the transport of address signals and data signals, each data processing device comprising:

a. a local data processor (P1 . . . P4) which comprises a first data port which is connected to the standard bus;

b. a local memory section (110, 112 114, 116) which comprises a second data port which is connected to the standard bus;

c. a local bus (126, 128, 130, 132) which connects the local data processor to the local memory section;

d. a priority device (118, 120, 122, 124) for granting a local data processor privileged access to the associated local memory in preference over an access via the standard bus; the multiprocessor also comprising:

A. a general memory which is formed by the aggregate of all local memories for the storage of program segments which correspond to any program to be executed;

B. a waiting list device for receiving and storing a succession of program execution request signals arriving from the common standard bus and for forming, for each of these request signals, a waiting list item for an associated data processing device;

C. an address translation device (18) for translating, upon reception of a branch instruction, a logic address into a physical address, characterized in that each processing device also comprises:

e. a first detector device (10) for selectively dectecting, during the execution of a program segment, a non-branch instruction, a branch instruction of a first type governing a branch in the current program segment without producing a portion changing interrupt signal, and a branch instruction of a second type governing a branch outside the current segment;

f. a second detector device (23) for selectively detecting, upon detection of a branch instruction of a second type, a branch with in the current program portion containing the program segment

**0 059 018**

being executed, and a portion changing branch to a second program portion, different from the current program portion, and for subsequently producing a portion changing interrupt signal (26) while terminating the execution of the current program portion;

g. the second detector device comprising a comparison device for comparing, upon decoding of a branch instruction of the second type, the number of the current program portion being executed and that of the program portion containing the physical destination address of the branch of the second type, and for subsequently producing a portion changing trap signal if the portion numbers differ;

h. an execution request signalling device (27) for accessing, upon production of a portion changing trap signal, the waiting list device by means of a program execution request signal from the processing device containing the portion following the program portion thus terminated, and a waiting list access signal for interrogating another waiting list item from its own waiting list.

2. A multiprocessor as claimed in Claim 1, characterized in that each data processing device also comprises a third detector device (28) for detecting, in a branch instruction of the second type, a predetermined program portion number and thereupon nullifying the associated portion changing trap signal, said nullifying being effective upon entering of as well as upon returning from its predetermined program portion.

3. A method of dynamic task assignment in the multiprocessing mode in a symmetrical multiprocessor as claimed in Claim 1, characterized in that the method consists first of all in the initial assignment of each task to a processor, said initial assignment serving to form for each processor a waiting list containing a succession of execution request signals;

secondly, during the execution of a task by a first processor, the method detects, using said second detector device (23), the execution of the branch instruction whose destination address is present in a different program portion and, is loaded in the local memory of another processor;

thirdly, upon said detection, said portion changing interrupt signal (26) is produced so that the execution of the current task in abandoned by the first processor and an execution request is generated in the waiting list of the other processor in order to continue the execution of said task so that a dynamic change of the task assignment has taken place.

FIG.1

FIG.2

FIG.5

FIG.3

22 — EXECA — 9

EXTBR? — 10

N

TCP := 1 — 11

LD A2 — 12

RT := S3 — 13

EXECB — 200

LST? — 14

N

202

Y

STP — 15

FIG.4

STRT — 16

INIT — 17

202

DECA2 — 18

N

TCP = 1? — 19

Y

TCP := 0 — 204

RE1 := k — 21

RE2 := m — 22

Y

RE1 = RE2? — 23

N

LDINSTR — 20

SVEDATA — 24

22

UPDATPRTN — 25

TRAP — 26

27 — SELECT